# EUROPÄISCHE PATENTSCHRIFT

(11) **EP 4 459 789 B1**
(45) Veröffentlichungstag und Bekanntmachung des Hinweises auf die Patenterteilung: **02.04.2025**
(21) Anmeldenummer: 23171296.9
(22) Anmeldetag: 03.05.2023
(51) Int. Cl.: H01Q 1/22, H01Q 9/04, H01Q 21/24

(54) **ANTENNE FÜR EINE RFID-LESEVORRICHTUNG MIT UMSCHALTUNG DER POLARISATION**
ANTENNA FOR RFID READER WITH POLARIZATION SWITCHING
ANTENNE POUR DISPOSITIF DE LECTURE RFID À COMMUTATION DE POLARISATION

(43) Veröffentlichungstag der Anmeldung: 06.11.2024
(73) Patentinhaber: SICK AG, 79183 Waldkirch (DE)
(72) Erfinder: Pudenz, Florian, 22359 Hamburg (DE)

(56) Entgegenhaltungen:
- KR-B1- 100 902 496
- KR-B1- 100 976 087
- KR-B1- 101 868 464

## Beschreibung

Die Erfindung betrifft eine Antenne für eine RFID-Lesevorrichtung und ein Verfahren zum Umschalten der Polarisation einer Antenne nach dem Oberbegriff von Anspruch 1 beziehungsweise 14.

RFID-Lesevorrichtungen dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Die RFID-Lesevorrichtung regt über ihre Antenne durch elektromagnetische Strahlung in ihrem Lesebereich befindliche RFID-Transponder zur Abstrahlung der gespeicherten Information an, empfängt die entsprechenden Transpondersignale und wertet sie aus. Dazu wird häufig der UHF-Frequenzbereich (Ultrahochfrequenz) verwendet, da es hier in dem Standard ISO 18000-6 einen etablierten Rahmen gibt und zudem Transponder in unterschiedlichen Entfernungen von einigen Millimetern bis hin zu mehreren Metern ausgelesen werden können. UHF-RFID-Transponder sind in sehr kompakten Bauformen verfügbar und können dementsprechend auch an sehr kleinen Objekten angebracht werden.

In vielen Anwendungen ist die Ausrichtung des RFID-Transponders bezüglich der RIFD-Lesevorrichtung nicht festgelegt oder zumindest nicht bekannt. Dann ist es für die Reichweite und Leserate von Vorteil, eine zirkular polarisierte Antenne zu verwenden, um eine Varianz in der Orientierung der RFID-Transponder auszugleichen. Da die meisten RFID-Transponder eine linear polarisierte Antenne einsetzen, wird jedoch selbst im besten Fall nur die Hälfte der empfangenen Energie aufgenommen. In Anwendungen mit fixer Ausrichtung des RFID-Transponders bezüglich der RIFD-Lesevorrichtung ist deshalb eine linear polarisierte Antenne passender Ausrichtung zu bevorzugen, da dann der RFID-Transponder deutlich mehr Energie aufnehmen kann, wodurch sich die Identifikationsreichweite entsprechend erhöht. Deshalb kann je nach Anwendungsfall der Einsatz einer RFID-Lesevorrichtung mit unterschiedlicher Polarisation in Betracht gezogen werden.

Die DE 20 2015 106 025 U1 offenbart eine RFID-Antennenanordnung zum Empfangen und Senden von elektromagnetischen Wellen unterschiedlicher Polarisation. Die Antenne weist in ihrer Grundform zwei Speisepunkte auf. Bereits damit ist der Schaltungsaufwand insbesondere für die Ansteuerung des verwendeten Mischers hoch, und es gibt relativ große Verluste in dem Speisenetzwerk. Erst mit vier Speisepunkten werden jedoch günstige Antenneneigenschaften erreicht, insbesondere im Hinblick auf das Achsenverhältnis, die beispielsweise Robustheit gegen Störungen durch metallische Objekte in der direkten Umgebung der Antenne schaffen. Zwar wird in der DE 20 2015 106 025 U1 auch eine Schaltungsvariante für vier Speisepunkte vorgestellt. Sie basiert aber auf einer Dopplung des Speisenetzwerks für zwei Speisepunkte, wodurch sich die genannten Nachteile sogar nochmals erheblich verschärfen.

In der US 7 932 867 B2 werden Verfahren zur Veränderung der Antennenpolarisation beschrieben. Dazu sind mehrere Antennen vorgesehen, die wahlweise eingesetzt werden, und das erhöht den konstruktiven Aufwand und benötigten Bauraum erheblich.

Die US 7 068 224 B2 offenbart eine Patchantenne, die zwischen vertikaler und linearer Polarisation umgeschaltet werden kann. Damit fehlt es an der Möglichkeit einer zirkularen Polarisation.

Aus der US 2011/0032079 A1 ist eine Antennenschaltanordnung mit einer Anordnung von Zugangsleitungen bekannt, durch die ein Signalpfad gewählt werden kann, indem Verbindungen auf Masse geschaltet werden. Dadurch entsteht an den beiden Ausgangsanschlüssen ein Signal mit linearer oder zirkularer Polarisation. Es ist auf diese Weise nicht möglich, zirkulare Polarisation beider Drehrichtungen zu erzeugen.

Eine Antennenanordnung gemäß EP 3 220 554 A1 kann zwischen verschiedenen Polarisationen umschalten, verwendet dafür jedoch je eine horizontal-linear und eine vertikallinear polarisierte Antenne. Das Speisenetzwerk könnte zudem nicht für vier Speisepunkte verwendet werden.

Die KR 10 0976087 B1 offenbart eine weitere Antennenanordnung zur wahlweisen Erzeugung linearer und zirkularer Polarisation. Das verwendete Speisenetzwerk steuert zwar vier Speisepunkte an, ist aber nicht in der Lage, Fehlanpassungen auszugleichen, die an der Patchantenne auftreten.

Die KR 101 868 464 B1 befasst sich mit einer Antenne, deren Polarisation über eingangsseitige Schalter angepasst werden kann. Dadurch wird das Signal je nach Schalterstellung und darüber gewähltem Signalpfad aufgeteilt und mittels Hybridkopplern phasenverschoben, um ausgangsseitig unterschiedliche Polarisationen bereitstellen zu können.

Aus der KR 100 902 496 B1 ist eine weitere Antenne bekannt, deren Polarisation über Schalter eingestellt werden kann.

Ein Antennen-Netzwerk gemäß EP 2 368 210 B1 ist in der Lage, eine Antenne zirkular oder elliptisch polarisiert so zu betreiben, dass sie wechselweise linksdrehend und rechtsdrehend polarisiert wird. Eine lineare Polarisation ist dabei jedoch nicht möglich. In der EP 1 987 468 B1 wird ein RFID-Multiplexer beschrieben, der ein RFID-Signal an unterschiedliche Antennen verteilt. Dabei besteht keine Möglichkeit, innerhalb einer Antenne unterschiedliche Polarisationen zu erzeugen.

Die DE 20 2015 105 455 U1 stellt eine Leiterstruktur für ein RFID-Signal vor, die aus geradlinigen Leitungsabschnitten auf den Kanten eines hexagonalen Rasters zusammengesetzt ist. Mit der Umschaltung von Polarisationen befasst sich das Dokument nicht.

Die nachveröffentlichte EP 4 318 806 A1, die unter Artikel 54(3) EPÜ fällt, offenbart ein Verfahren zur Herstellung einer modularen Antenne für eine RFID-Vorrichtung. Darin ist eine Polarisationssteuerungslogik erwähnt, die aber nicht genauer erklärt wird.

Es ist daher Aufgabe der Erfindung, eine Antenne mit umschaltbarer Polarisation weiter zu verbessern.

Diese Aufgabe wird durch eine Antenne für eine RFID-Lesevorrichtung und ein Verfahren zum Umschalten der Polarisation einer Antenne nach Anspruch 1 beziehungsweise 14 gelöst. Die Antenne weist ein Antennenelement auf, mit dem ein Signal abgestrahlt beziehungsweise empfangen wird. Auf dem Antennenelement sind vier Speisepunkte vorgesehen. Ein Speisenetzwerk verbindet ein Eingangssignal derart mit den Speisepunkten, dass wahlweise eine Antenne mit zirkularer oder linearer Polarisation entsteht. Je nach Polarisationszustand werden dabei alle Speisepunkte oder nur eine Teilauswahl davon gespeist.

Die Erfindung geht von dem Grundgedanken aus, in dem Speisenetzwerk mittels einer Schaltungsanordnung verschiedene Schaltzustände einzustellen. Die Schaltzustände entsprechen jeweils einer Polarisation. Insgesamt sind für eine RFID-Lesevorrichtung vier Polarisationen von Interesse, nämlich horizontal-lineare Polarisation, vertikal-lineare Polarisation, rechtsdrehend zirkulare Polarisation und linksdrehend zirkulare Polarisation. Das Speisenetzwerk ermöglicht Schaltzustände für mindestens drei dieser vier Polarisationen. In dem jeweiligen Schaltzustand ist dafür gesorgt, dass die Speisepunkte jeweils mit einem aus dem Eingangssignal abgeleiteten Signal einer Phase und Leistungen gespeist werden, aus dem sich insgesamt die gewählte Polarisation ergibt. Für manche Polarisationen und Speisepunkte kann dies bedeuten, dass kein Signal anliegen soll. Das Speisenetzwerk kann also an unterschiedlichen Ausgängen unterschiedliche Leistungspegel mit zueinander unterschiedlichen Phasenwinkeln ausgeben, wobei die Leistungen und Phasen je nach Schaltzustand über die Speisepunkte an dem Antennenelement die zugehörige Polarisation erzeugen.

Die Erfindung hat den Vorteil, dass ein Betrieb der Antenne mit jeweils für die Anwendungssituation und die zu lesenden RFID-Transponder optimaler Polarisation ermöglicht wird. Das erfindungsgemäße Speisenetzwerk ist in der Lage, das Eingangssignal mit besonders geringen Verlusten in die vier Speisepunkte einzukoppeln. Je geringer wiederum die Verluste für Signalaufteilung und Weiterleitung sind, desto höher ist der Antennengewinn. Bei RFID-Antennen wirkt sich das sogar doppelt aus, weil dieselbe Antenne für den Sende- und Empfangsbetrieb genutzt wird. Insgesamt erhöhen sich damit die Leserate und die Reichweite.

Die Speisepunkte sind bevorzugt symmetrisch angeordnet, insbesondere in einem Quadrat. Das sorgt für besonders günstige Antennen- und Polarisationseigenschaften und einen übersichtlichen, einfachen Aufbau.

Die Schaltungsanordnung weist bevorzugt ein erstes Schaltelement und ein zweites Schaltelement mit einer Vielzahl von Verbindungsleitungen dazwischen auf, insbesondere vier Verbindungsleitungen. Durch eine zweistufige Schalterstruktur entsteht bei noch geringer Komplexität eine hinreichende Flexibilität, um die unterschiedlichen Polarisationen zu erzeugen.

In den Verbindungsleitungen zwischen dem ersten Schaltelement und dem zweiten Schaltelement ist bevorzugt ein 90°-Hybridkoppler vorgesehen, insbesondere in zwei der Verbindungsleitungen. Der 90°-Hybridkoppler kann damit wahlweise je nach Schaltzustand in die Speisung einbezogen werden. Insbesondere wird eine 90°-Phase für die zirkularen Polarisationen verwendet. Bei linearer Polarisation können die Verbindungsleitungen mit dem 90°-Hybridleiter durch einen zugehörigen Schaltzustand umgangen werden, was zu einer besseren Anpassung der Antenne führt.

Das erste Schaltelement weist bevorzugt auf einer Eingangsseite mindestens einen Anschluss für das Eingangssignal und auf einer Ausgangsseite hin zu dem Antennenelement vier Anschlüsse auf. Das erste Schaltelement stellt damit das Eingangssignal schaltbar an einem von vier Ausgängen zur Verfügung, wobei vorzugsweise die vier Ausgänge mit den vier Verbindungsleitungen verbunden sind. In einer Ausführungsform ist das eine 1:4-Zuordnung. Besonders bevorzugt weist das erste Schaltelement auf der Eingangsseite einen weiteren Anschluss auf, der mit einem Antennenabschluss verbunden ist. Das ergibt dann eine Ausführungsform mit einer 2:4-Zuordnung. Der einbezogene Antennenabschluss sorgt für eine deutlich verbesserte Antennenanpassung.

Das erste Schaltelement ist bevorzugt als Vierwegeschalter, insbesondere DP4T (Double Pole Quadruple Throw), oder als Kombination von Wechselschaltern ausgebildet, insbesondere eines DPDT (Double Pole Double Throw) mit zwei nachgeschalteten SPDT (Single Pole Double Throw). Das sind konkrete einfache Schalterbausteine, die sich für eine 2:4-Zuordnung eignen. Eingangsseitig sind vorzugsweise das Eingangssignal und ein Antennenabschluss verbunden, ausgangsseitig die vier Verbindungsleitungen zu dem zweiten Schaltelement.

Das erste Schaltelement weist bevorzugt auf einer Eingangsseite einen Anschluss für das Eingangssignal und auf einer Ausgangsseite hin zu dem Antennenelement drei Anschlüsse auf, wobei der 90°-Hybridkoppler fest mit einem Antennenabschluss verbunden ist. Das entspricht einer 1:3-Zuordnung und ist geeignet für eine Ausführungsform, die nur drei Polarisationen wählen lässt, nämlich die beiden linearen Polarisationen und eine zirkulare Polarisation, deren Drehrichtung durch das Speisenetzwerk festgelegt ist. Der Antennenabschluss ist hier fest dem Schaltzustand zugeordnet, in dem der 90°-Hybridkoppler einbezogen ist, so dass eingangsseitig keine zwei Anschlüsse benötigt werden. Die Drehrichtung der zirkularen Polarisation lässt sich schaltungstechnisch dadurch wählen, auf welcher Seite der 90°-Hybridkoppler mit dem ersten Schaltelement beziehungsweise dem Antennenabschluss verbunden ist; eine Vertauschung führt hier zu einer Umkehr der Drehrichtung. Ein konkreter beispielhafter Schalterbaustein für diese Ausführungsform ist ein SP3T (Single Pole Triple Throw).

Das erste Schaltelement weist bevorzugt auf der Ausgangsseite zusätzliche Anschlüsse für ein weiteres Antennenelement auf. Dafür wird eine 1:n-Zuordnung mit n>4 benötigt, wie n=8 für den Anschluss einer weiteren Antenne mit vier wählbaren Polarisationen. Das lässt sich beispielsweise durch die Kombination eines vorgeordneten 2:2-Schalters (DPDT) und zweier Vierwegeschalter (SP4T) erreichen.

Das zweite Schaltelement weist bevorzugt zwei Wechselschalter auf, mit denen insbesondere jeweils wahlweise eine von zwei Verbindungsleitungen zu dem Antennenelement durchschaltbar ist. Die beiden Wechselschalter, insbesondere SPDT, sind insbesondere eingangsseitig paarweise mit den vier Verbindungsleitungen von dem ersten Schaltelement verbunden, so dass jeweils in einer 2:1-Zuordnung ein Paar Verbindungsleitungen auf eine zu den Speisepunkten gerichtete ausgangsseitige Leitung der Wechselschalter verschaltet ist. Dabei wird das jeweilige Paar vorzugsweise von einer direkten Verbindungsleitung des ersten Schaltelements und einer über den 90°-Hybridkoppler geführten Verbindungsleitung gebildet. Es sei erwähnt, dass es auch in der genannten Ausführungsform mit einem ersten Schaltelement mit 1:3-Zuordnung eine vierte Verbindungsleitung gibt, nämlich diejenige von dem Antennenabschluss an dem 90°-Hybridkoppler.

Das Speisenetzwerk weist bevorzugt zwei 180°-Leistungsteiler auf, von denen der eine 180°-Leistungsteiler mit zwei Speisepunkten und der andere 180°-Leistungsteiler mit den verbleibenden zwei Speisepunkten verbunden ist, um die jeweiligen zwei verbundenen Speisepunkte mit um 180° phasenversetzten Teilsignalen des Eingangssignals zu speisen. Die 180°-Leistungsteiler teilen das eingehende Signal auf und führen die Teilsignale mit jeweiligem 180°-Phasenversatz ihren zugeordneten Speisepunkten zu. Vorzugsweise bilden die beiden Paare von Speisepunkten die Diagonalen in der Anordnung der Speisepunkte. Vorzugsweise ist jeweils ein 180°-Leistungsteiler mit einem der Wechselschalter des zweiten Schaltelements verbunden.

Die 180°-Leistungsteiler sind bevorzugt als Hybrid-Ringkoppler (Ratrace Hybrid) ausgebildet. Das ist ein bewährtes und geeignetes Schaltungselement, um aus einem Signal zwei Teilsignale mit gegenseitigem 180°-Phasenversatz zu erzeugen. Alternativ sind die 180°-Leistungsteiler als Wilkinson-Teiler oder T-Leistungsteiler ausgebildet. Der 180°-Phasenversatz wird dann insbesondere mittels einer Verzögerungsleitung für eines der Teilsignale in der Verbindung zwischen Wilkinson-Teiler oder T-Leistungsteiler und Speisepunkt erzeugt.

Das Speisenetzwerk ist ohne Kreuzungen ausgebildet. Das ist durch geschickte geometrische Anordnung möglich, insbesondere unter Ausnutzung der auf hexagonalen Waben beruhenden Leitungsstruktur gemäß der einleitend genannten DE 20 2015 105 455 U1. Ein Speisenetzwerk ohne Kreuzungen wiederum kann in einer einzigen Lage hergestellt werden, es ist dafür kein Wechsel des Leiterplatten- oder Platinenlayers erforderlich. Das führt zu einem besonders kostengünstigen und einfach zu handhabenden Bauteil.

Die Antenne weist bevorzugt eine Leiterplatte auf, auf deren einer Fläche das Antennenelement und auf deren anderer Fläche das Speisenetzwerk angeordnet ist. Das ergibt eine besonders kompakte Bauform. Besonders günstig ist dies mit einem Speisenetzwerk ohne Kreuzungen gemäß dem Vorabsatz. Es genügt dann eine einfache Leiterplatte, es ist kein komplexer mehrschichtiger Aufbau erforderlich. Das Antennenelement ist dabei bevorzugt als Antennenpatch ausgebildet, denn ein solcher Patch kann ebenfalls flach und in einer Schicht aufgebracht werden. Es entsteht eine sehr kompakte Patchantenne mit guten Antenneneigenschaften und der Möglichkeit, zwischen bis zu vier Polarisationen zu wählen.

In bevorzugter Weiterbildung weist eine RFID-Lesevorrichtung eine erfindungsgemäße Antenne, einen mit der Antenne verbundenen Transceiver sowie eine mit dem Transceiver verbundene RFID-Steuer- und Auswertungseinheit auf. Die Antenne kann dabei als interne oder externe Antenne der RFID-Lesevorrichtung betrieben werden. Die Antenne wird von der RFID-Lesevorrichtung zum Senden von RFID-Signalen an einen RFID-Transponder und/oder zum Empfangen von RFID-Signalen von einem RFID-Transponder verwendet. Als Transceiver wird hier jede Kombination eines Senders und Empfängers bezeichnet. Die RFID-Steuer- und Auswertungseinheit, die mindestens einen digitalen Rechenbaustein aufweist, wie einen Mikroprozessor, ein FPGA (Field Programmable Gate Array), einen ASIC (Application Specific Integrated Circuit) oder dergleichen, ist für das Eincodieren einer RFID-Information in die RFID-Signale und/oder zum Auslesen einer RFID-Information aus den RFID-Signalen ausgebildet. Transceiver und RFID-Steuer- und Auswertungseinheit können einen gemeinsamen Rechenbaustein bilden oder jedenfalls teilweise einen Rechenbaustein gemeinsam nutzen. Eine solche RFID-Lesevorrichtung wird bevorzugt in stationärer Montage an einem Lesebereich eines Förderers oder eines Leseportals zum Auslesen mindestens eines auf dem Förderer oder durch das Leseportal bewegten RFID-Transponders eingesetzt. Je nach Anwendungssituation kann eine passende Polarisation eingestellt und diese auch dynamisch im Betrieb gewechselt werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer RFID-Lesevorrichtung mit Antenne;
- Fig. 2: eine schematische Darstellung eines Speisenetzwerks für vier Speisepunkte und vier Polarisationen;
- Fig. 3: eine alternative Darstellung des Speisenetzwerks gemäß Figur 2;
- Fig. 4: eine Tabelle mit Polarisationen und zughörigen Schalterständen des Speisenetzwerks;
- Fig. 5: ein beispielhaftes Layout des Speisenetzwerks;
- Fig. 6: eine schematische Darstellung einer weiteren Ausführungsform des Speisenetzwerks mit eingangsseitig einem DPDT und zwei SPDTs anstelle eines DP4T;
- Fig. 7: eine schematische Darstellung einer weiteren Ausführungsform des Speisenetzwerks mit zusätzlichen Anschlüssen für eine weitere Antenne;
- Fig. 8: eine schematische Darstellung einer weiteren Ausführungsform des Speisenetzwerks mit Wilkinson-Teilern und 180°-Verzögerungsleitungen anstelle von Ringkopplern;
- Fig. 9: eine schematische Darstellung einer weiteren Ausführungsform des Speisenetzwerks mit T-Leistungsteilern anstelle von Wilkinson-Teilern; und
- Fig. 10: eine schematische Darstellung einer weiteren Ausführungsform, in der das Speisenetzwerk nur eine zirkulare Polarisation unterstützt.

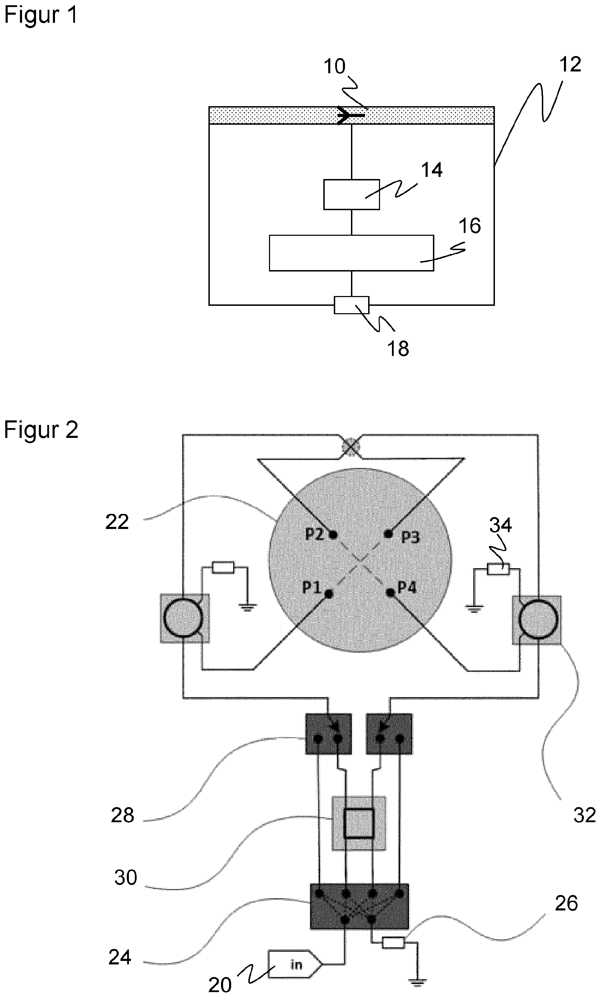

Figur 1 zeigt eine schematische Darstellung einer Antenne 10 in einer RFID-Lesevorrichtung 12. Die Antenne 10 ist beispielsweise für das ISM-Band bei etwa 900 MHz ausgelegt. An die Antenne 10 ist ein Transceiver 14 und daran eine Steuer- und Auswertungseinheit 16 der RFID-Lesevorrichtung 12 angeschlossen, um mittels der Antenne 10 empfangene RFID-Signale auszuwerten oder Informationen als RFID-Signale an einen Transponder zu senden. Die Steuer- und Auswertungseinheit 16 ist weiterhin mit einer drahtgebundenen oder drahtlosen Schnittstelle 18 verbunden, um Daten auszutauschen, Parametrierungen vorzunehmen und dergleichen.

Die Funktionsweise einer RFID-Lesevorrichtung beispielsweise für den UHF-Frequenzbereich (Ultrahochfrequenz) nach dem Standard ISO 18000-6 ist an sich bekannt und wird deshalb nicht näher erläutert. Die Erfindung bezieht sich auf die Antenne 10 beziehungsweise deren Speisenetzwerk, wie im Anschluss unter Bezugnahme auf die weiteren Figuren 2 bis 10 detailliert beschrieben. Anstelle der dargestellten internen Antenne 10 ist auch eine externe Antenne denkbar, wobei dann Transceiver 14 und Steuer- und Auswertungseinheit 16 in mindestens einem weiteren, von der Antenne 10 getrennten und über ein Kabel angeschlossenen Gehäuse untergebracht sind.

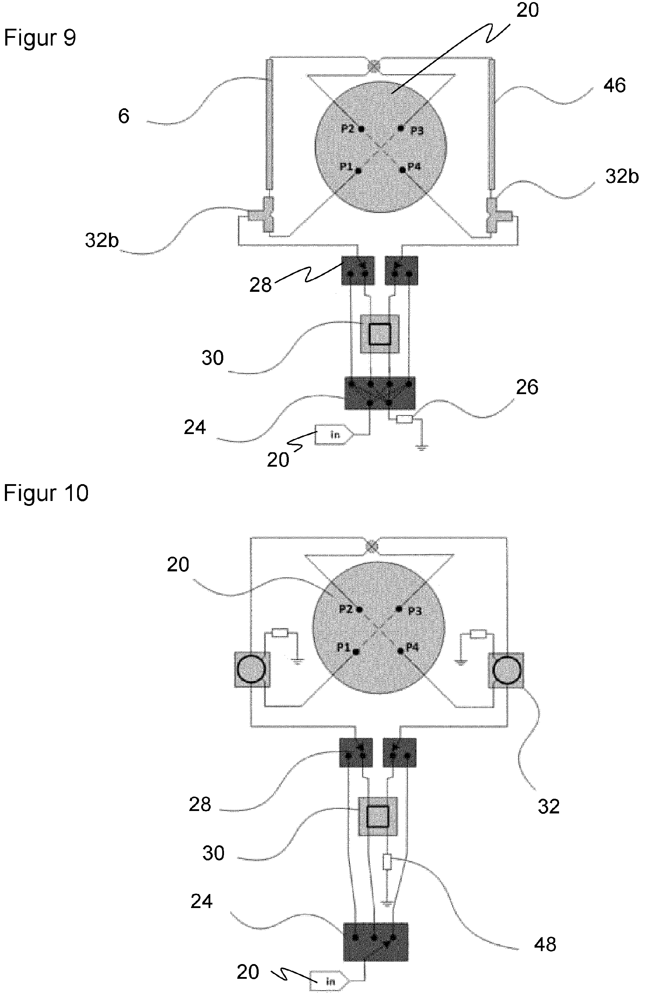

Figur 2 zeigt eine schematische Darstellung eines Speisenetzwerks für die Antenne 10. Das Speisenetzwerk hat die Funktion, das Eingangssignal 20 aufzuteilen und mit passenden Leistungspegeln und Phasen an vier Speisepunkten P1... P4 in ein Antennenelement 22 einzukoppeln, so dass insgesamt eine Antenne 10 mit gewünschter Polarisation entsteht. Das Antennenelement 22 ist vorzugsweise ein Antennenpatch, so dass eine Patchantenne entsteht. Mit dem dargestellten Speisenetzwerk sind je nach Schaltzustand eine horizontal-lineare Polarisation, eine vertikal-lineare Polarisation, eine rechtsdrehend zirkulare Polarisation und eine linksdrehend zirkulare Polarisation möglich, also vier Polarisationen. Eine später unter Bezugnahme auf die Figur 10 vorgestellte Ausführungsform des Speisenetzwerks lässt nur eine zirkulare Polarisation und damit drei Polarisationen zu.

Das Speisenetzwerk weist ein erstes Schaltelement 24 auf, im gezeigten Beispiel ein Vierwegeschalter mit zwei eingangsseitigen Anschlüssen (DP4T, Double Pole Quadruple Throw), mit dem das Eingangssignal 20 auf vier Anschlüsse verteilt wird. An dem zweiten eingangsseitigen Anschluss ist ein Antennenabschluss 26 vorgesehen. Dem ersten Schaltelement 24 ist ein zweites Schaltelement 28 nachgeordnet, das beispielsweise zwei einpolige Wechselschalter aufweist (SPDT, Single Pole Double Throw). Vier Verbindungsleitungen von den vier ausgangsseitigen Anschlüssen des ersten Schaltelements 24 zu dem zweiten Schaltelement 28 sind paarweise mit den eingangsseitigen Anschlüssen der einpoligen Wechselschalter verbunden. In jeweils einer Verbindungsleitung eines jeden Paares ist ein 90°-Hybridkoppler 30 verschaltet (Branchline Hybrid, 90° 3dB Divider). Ausgangs des zweiten Schaltelements 28 sind zwei 180°-Leistungsteiler 32 angeschlossen, in dieser Ausführungsform als Ringkoppler (Ratrace Hybrid, 180° 3dB Divider), der jeweils für sich nochmals einen Abschluss 34 aufweist. Dadurch wird ein jedes der beiden Teilsignale von den beiden einpoligen Wechselschaltern des zweiten Schaltelements 28 nochmals aufgeteilt, und die entstehenden Teilsignale werden mit einem 180°-Phasenversatz den Speisepunkten P1, P3 beziehungsweise P2, P4 zugeführt.

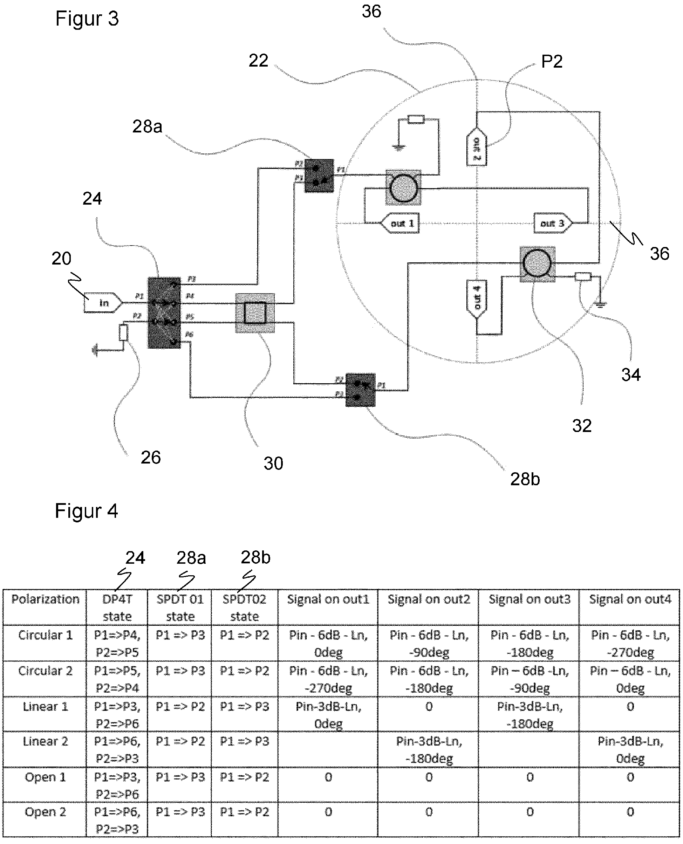

Figur 3 zeigt eine alternative Darstellung des Speisenetzwerks gemäß Figur 2. Im Bereich des Antennenelements 22 sind dessen Symmetrieachsen 36 eingezeichnet, bezüglich derer auch die Speisepunkte P1... P4 symmetrisch angeordnet sind, vorzugsweise in Form eines zentrierten Quadrats. Bei symmetrischer Verteilung der Speisepunkte ist ein Phasenversatz von 90° für eine zirkulare Polarisation beziehungsweise von 180° für eine lineare Polarisation erforderlich, wie dies von dem Speisenetzwerk bereitgestellt wird. Eine abweichende, nicht symmetrische Anordnung ist möglich, bedarf dann aber einer entsprechenden Anpassung der Phasen oder erreicht die jeweils gewünschte Polarisation nur näherungsweise.

Figur 4 zeigt eine Tabelle mit Polarisationen und zughörigen Schalterständen des Speisenetzwerks. In der ersten Spalte sind die verschiedenen Polarisationen eingetragen. Die Varianten "Open 1" und "Open 2" sind Sonderfälle, die für den eigentlichen Betrieb der Antenne 10 nicht benötigt werden. Die ausdrückliche Beschaltung des Eingangssignals 20 auf ein offenes oder gegen Masse kurzgeschlossenes Leitungsende kann beispielsweise für eine Referenzmessung oder Kalibrierung genutzt werden, um die Strecke zwischen dem RFID-Frontend mit dem Transceiver 14 und dem Speisenetzwerk zu charakterisieren, etwa um die Leitungsdämpfung bei abgesetzten Antennen mit längerem Kabel zu bestimmen.

Die zweite Spalte zeigt, wie für einen jeweiligen Polarisationszustand der ersten Spalte die eingangsseitigen Anschlüsse P1, P2 des ersten Schaltelements 24 mit dessen ausgangsseitigen Anschlüssen P3... P6 verbunden werden. In der dritten und vierten Spalte ist entsprechend der Schaltzustand der beiden einpoligen Wechselschalter 28a-b des zweiten Schaltelements 28 gezeigt. Zu beachten ist, dass die Bezeichnungen Px mehrfach für Anschlüsse verschiedener Schaltelemente und auch die Speisepunkte verwendet sind, es ist aber aus dem jeweiligen Kontext eindeutig ersichtlich, worauf sich die Bezeichnung bezieht. Die hinteren vier Spalten führen die an den Speisepunkten P1... P4 ankommenden Signale auf, wobei die Speisepunkte in der Tabelle wie schon in Figur 3 mit out1...out4 bezeichnet sind. Dabei bedeutet Pin die jeweilige Eingangsleistung.

Als ein Lesebeispiel wird die erste zirkulare Polarisation gemäß der ersten Zeile der Tabelle dadurch erreicht, dass das erste Schaltelement 24 über P4 und P5 einen Anschluss zu den inneren Verbindungsleitungen mit dem 90°-Hybridkoppler herstellt, während das zweite Schaltelement 28 diese inneren Verbindungsleitungen über P3 des ersten einpoligen Wechselschalters 28a und P2 des zweiten einpoligen Wechselschalters 28b auf die 180°-Leistungsteiler 32 durchleitet. Die beiden Teilsignale ausgangs des zweiten Schaltelements 28 sind somit um 90° zueinander phasenversetzt, und die 180°-Leistungteiler erzeugen dadurch ein 0°-Teilsignal für den Speisepunkt P1, ein 90°-Teilsignal für P2, ein 180°-Teilsignal für P3 und ein 270°-Teilsignal für P4.

Die Antenne 10 ermöglicht mit ihren vier Speisepunkten eine zirkulare Polarisation mit geringem Achsenverhältnis. Dadurch wird die Antenne 10 robuster gegen Störungen von außen, insbesondere metallische Gegenstände oder Reflektoren nahe der Antenne 10. Für die Erzeugung einer linearen Polarisation können jeweils Teilsignale mit einem Phasenversatz von 180° an zwei Speisepunkten eingekoppelt werden. Die Dämpfung ist bei allen Polarisationen gering. Bei linearer Polarisation wird der 90°-Hybridkoppler 30 umgangen, so dass die Dämpfung sogar noch geringer bleiben kann als bei zirkularer Polarisation.

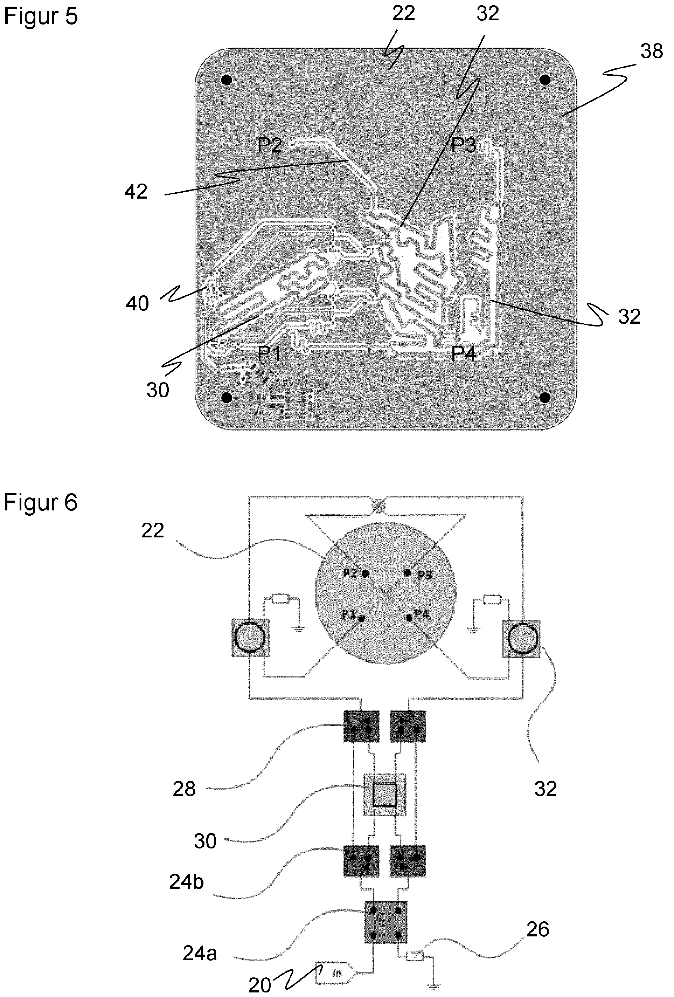

Figur 5 zeigt ein beispielhaftes konkretes Layout des Speisenetzwerks auf einer Platine oder Leiterplatte 38, das in Figur 3 schematisch gezeigt ist. Angedeutet ist das Antennenelement 22 auf der Rückseite der Leiterplatte 38 zu erkennen. Die Strukturen des 90°-Hybridkopplers 30 ebenso wie diejenigen der beiden 180°-Leistungsteiler 32 nutzen eine Leiterstruktur auf einem hexagonalen Raster gemäß der einleitend genannten DE 20 2015 105 455 U1. Sie sind durch als impedanzangepasste Mikrostreifenleitungen 40 realisierte Verbindungen angeschlossen. Ausgangs der beiden 180°-Leistungsteiler 32 führen Verbindungsleitungen 42 zu den Speisepunkten P1 bis P4, deren symmetrische Anordnung in der zugehörigen schematischen Darstellung der Figur 3 noch besser erkennbar ist.

Die Besonderheit des gezeigten Speisenetzwerks liegt darin, dass es in einer einzigen Kupferlage (Layer) realisiert werden kann. Das Speisenetzwerk kommt ohne Kreuzungen der Leitungen und damit ohne Wechsel des Platinenlayers und für Leitungskreuzungen erforderliche Bauteile aus, zumal entsprechende Kreuzungen (Vias) für eine Impedanzanpassung besonderer Aufmerksamkeit in Bezug auf Dämpfung und Phasenverschiebung bedürfen würden. Damit verringert sich durch ein einlagiges Layout des Speisenetzwerks wie in Figur 5 die Komplexität, und es können Kosten eingespart und dennoch besonders gute Antennen- und Polarisationseigenschaften erzielt werden. Eine besonders kompakte Bauform der Antenne 10 entsteht, wenn das Speisenetzwerk auf der einen Seite oder Fläche der Leiterplatte 38 angeordnet ist (Unterseite), insbesondere einlagig, und das Antennenelement 22 auf der anderen Seite oder Fläche (Oberseite), insbesondere in Form eines Antennenpatches. Ein solcher gut integrierbarer Aufbau ermöglicht auch leicht eine modulare Variantenbildung für unterschiedliche Gehäuse, wie dies in der einleitend genannten noch unveröffentlichten europäischen Patentanmeldung mit dem Aktenzeichen 22188151.9 beschrieben ist.

Figur 6 zeigt eine schematische Darstellung einer weiteren Ausführungsform des Speisenetzwerks. Im Unterschied zu den bisher beschriebenen Ausführungsformen ist hier das erste Schaltelement als Hintereinanderanordnung eines zweipoligen Wechselschalters 24a (DPDT, Double Pole Double Throw) mit zwei einpoligen Wechselschaltern 24b (SPDT, Single Port Double Throw) ausgebildet. Damit kann ein Vierwegeschalter (DP4T, Double Port Quadruple Throw) nachgebildet und ersetzt werden.

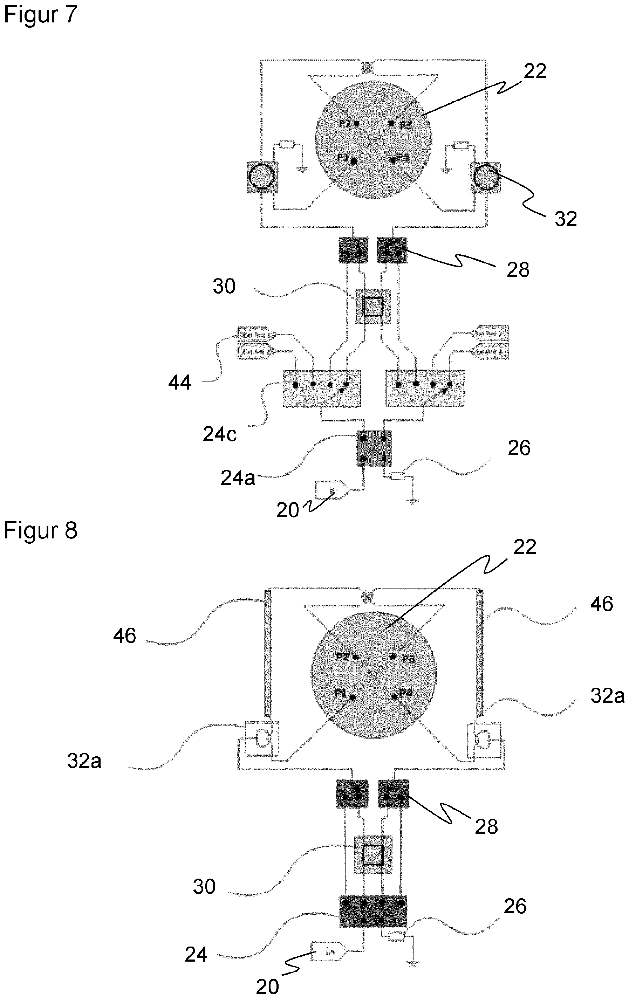

Figur 7 zeigt eine schematische Darstellung einer weiteren Ausführungsform des Speisenetzwerks. Im Unterschied zu den bisher beschriebenen Ausführungsformen stellt hier das erste Schaltelement zusätzliche Anschlüsse 44 für eine weitere, nicht gezeigte Antenne in verschiedenen schaltbaren Polarisationen zur Verfügung. Dazu sind hier beispielhaft einem zweipoligen Wechselschalter (DPDT) zwei Vierwegeschalter (SP4T) nachgeordnet. Damit gibt es ausgangs des ersten Schaltelements insgesamt acht Anschlüsse, von denen vier Anschlüsse wie bisher für die Erzeugung der vier Polarisationen der Antenne 10 und vier weitere Anschlüsse als die zusätzlichen Anschlüsse 44 für eine weitere Antenne genutzt werden können.

Figur 8 zeigt eine schematische Darstellung einer weiteren Ausführungsform des Speisenetzwerks. Im Unterschied zu den bisherigen Ausführungsformen sind hier die 180°-Leistungsteiler 32 nicht mehr als Hybrid-Ringkoppler, sondern als Wilkinson-Teiler 32a ausgebildet. Der 180°-Phasenversatz wird mittels Verzögerungsleitungen passender Verzögerung erreicht. Es wäre alternativ ein Schiffmann-Phasenschieber denkbar, um eine Leistungsteilung bei passendem Phasenversatz über einen größeren Frequenzbereich des Speisenetzwerks zu ermöglichen. Somit ist auf Basis der Wilkinson-Teiler 32a ebenfalls eine 3dB-180°-Leistungsteilung möglich. Der Vorteil gegenüber Ringkopplern besteht bei richtiger Dimensionierung in einer geringeren Durchgangsdämpfung. Zwar ist andererseits die Isolation zwischen den Ausgangsports geringer, aber das spielt für den Aufbau der Antenne 10 eine untergeordnete Rolle, da die Signale auf das gleiche Antennenelement 22 eingekoppelt werden sollen und dort insbesondere bei Auslegung als Antennenpatch ohnehin eine relativ gute Verkopplung zwischen zwei gegenüberliegenden Speisepunkten besteht

Figur 9 zeigt nochmals eine Alternative zu Figur 8, in der nun die Wilkinson-Teiler 32a durch T-Leistungsteiler 32b ersetzt sind. Ansonsten wird auf die Erläuterungen zu Figur 8 verwiesen. Die Wahl geeigneter 180°-Leistungsteiler 32, 32a, 32b ist in allen Ausführungsformen möglich, dies ist nicht auf die speziellen Darstellungen der Figuren 8 und 9 beschränkt.

Figur 10 zeigt eine schematische Darstellung einer weiteren Ausführungsform, in der das Speisenetzwerk nur eine zirkulare Polarisation und nicht beide zirkularen Polarisationen beider Drehrichtungen unterstützt. Als erstes Schaltelement 24 ist hier ein Dreiwegeschalter eingesetzt (SP3T, Single Pole Triple Throw). Es ist nur eine Verbindung zu dem 90°-Hybridkoppler 30 schaltbar, dessen anderer Anschluss ist fix mit einer Antennenanpassung 48 verbunden. Die Drehrichtung der zirkularen Polarisation ist hier nur noch durch Schaltungsauslegung wählbar. Das Speisenetzwerk gemäß Figur 10 erlaubt somit nur die Wahl zwischen drei Polarisationen und hat dafür den Vorteil, durch die verringerte Anzahl Schalter beziehungsweise einfachere Auslegung der Schalterbauteile geringere Verluste zu erzeugen.

## Patentansprüche

1. Antenne (10) für eine RFID-Lesevorrichtung (12), wobei die Antenne (10) ein Antennenelement (22) mit vier Speisepunkten (P1..P4) sowie ein Speisenetzwerk aufweist, das dafür ausgebildet ist, ein Eingangssignal (20) wahlweise derart mit den Speisepunkten (P1..P4) zu verbinden, dass die Antenne (10) mit einer zirkularen Polarisation oder einer linearen Polarisation betrieben wird, wobei das Speisenetzwerk eine Schaltungsanordnung (24, 28) aufweist, in der verschiedene Schaltzustände einstellbar sind, wobei das Speisenetzwerk die Speisepunkte (P1..P4) in einem jeweiligen Schaltzustand mit unterschiedlichen Phasen und/oder Leistungsanteilen des Eingangssignals (20) speist, und wobei in der Schaltungsanordnung (24, 28) Schaltzustände für mindestens drei der vier Polarisationen horizontal-lineare Polarisation, vertikal-lineare Polarisation, rechtsdrehend zirkulare Polarisation und linksdrehend zirkulare Polarisation einstellbar sind,
**dadurch gekennzeichnet,**
**dass** das Speisenetzwerk ohne Kreuzungen ausgebildet ist.

2. Antenne (10) nach Anspruch 1,
wobei die Speisepunkte (P1..P4) symmetrisch angeordnet sind, insbesondere in einem Quadrat.

3. Antenne (10) nach Anspruch 1 oder 2,
wobei die Schaltungsanordnung (24, 28) ein erstes Schaltelement (24) und ein zweites Schaltelement (28) mit einer Vielzahl von Verbindungsleitungen dazwischen aufweist, insbesondere vier Verbindungsleitungen.

4. Antenne (10) nach Anspruch 3,
wobei in den Verbindungsleitungen zwischen dem ersten Schaltelement (24) und dem zweiten Schaltelement (28) ein 90°-Hybridkoppler (30) vorgesehen ist, insbesondere in zwei der Verbindungsleitungen.

5. Antenne (10) nach Anspruch 3 oder 4,
wobei das erste Schaltelement (24) auf einer Eingangsseite mindestens einen Anschluss für das Eingangssignal (20) und auf einer Ausgangsseite hin zu dem Antennenelement (22) vier Anschlüsse aufweist, wobei insbesondere das erste Schaltelement (24) auf der Eingangsseite einen weiteren Anschluss aufweist, der mit einem Antennenabschluss (26) verbunden ist.

6. Antenne (10) nach Anspruch 5,
wobei das erste Schaltelement (24) als Vierwegeschalter, insbesondere DP4T, oder als Kombination von Wechselschaltern (24a-b) ausgebildet ist, insbesondere eines DPDT mit zwei nachgeschalteten SPDT.

7. Antenne (10) nach Anspruch 3 oder 4,
wobei das erste Schaltelement (24), insbesondere ausgebildet als SP3T, auf einer Eingangsseite einen Anschluss für das Eingangssignal und auf einer Ausgangsseite hin zu dem Antennenelement (22) drei Anschlüsse aufweist, und wobei der 90°-Hybridkoppler (30) fest mit einem Antennenabschluss (48) verbunden ist.

8. Antenne (10) nach einem der Ansprüche 3 bis 7,
wobei das erste Schaltelement (24) auf der Ausgangsseite zusätzliche Anschlüsse (44) für ein weiteres Antennenelement aufweist.

9. Antenne (10) nach einem der Ansprüche 3 bis 8,
wobei das zweite Schaltelement (28) zwei Wechselschalter aufweist, mit denen insbesondere jeweils wahlweise eine von zwei Verbindungsleitungen zu dem Antennenelement (22) durchschaltbar ist.

10. Antenne (10) nach einem der Ansprüche 2 bis 9,
wobei das Speisenetzwerk zwei 180°-Leistungsteiler (32) aufweist, von denen der eine 180°-Leistungsteiler mit zwei Speisepunkten (P1, P3) und der andere 180°-Leistungsteiler mit den verbleibenden zwei Speisepunkten (P2, P4) verbunden ist, um die jeweiligen zwei verbundenen Speisepunkte (P1, P3; P2, P4) mit um 180° phasenversetzten Teilsignalen des Eingangssignals (20) zu speisen, wobei insbesondere jeweils ein 180°-Leistungsteiler (32) mit einem Wechselschalter des zweiten Schaltelements (28) verbunden ist.

11. Antenne (10) nach Anspruch 10,
wobei die 180°-Leistungsteiler (32) als Hybrid-Ringkoppler (Ratrace Hybrid) ausgebildet sind
oder wobei die 180°-Leistungsteiler (32) als Wilkinson-Teiler oder T-Leistungsteiler mit jeweils einer Verzögerungsleitung (46) in der Verbindung zwischen Wilkinson-Teiler oder T-Leistungsteiler und Speisepunkt (P1..P4) ausgebildet sind, die einen 180°-Phasenversatz erzeugt.

12. Antenne (10) nach einem der vorhergehenden Ansprüche,
die eine Leiterplatte (38) aufweist, auf deren einer Fläche das Antennenelement (22) und auf deren anderer Fläche das Speisenetzwerk angeordnet ist, wobei insbesondere das Antennenelement (22) als Antennenpatch ausgebildet ist.

13. RFID-Lesevorrichtung (12) mit einer Antenne (10) nach einem der vorhergehenden Ansprüche, die einen mit der Antenne (10) verbundenen Transceiver (14) sowie eine mit dem Transceiver (14) verbundene RFID-Steuer- und Auswertungseinheit (16) aufweist.

14. Verfahren zum Umschalten der Polarisation einer Antenne (10) für eine RFID-Lesevorrichtung (12), wobei die Antenne (10) ein Antennenelement (22) mit vier Speisepunkten (P1..P4) aufweist, wobei mit Hilfe eines Speisenetzwerks der Antenne (10) ein Eingangssignal (20) wahlweise auf unterschiedliche Weise derart mit den Speisepunkten (P1..P4) verbunden wird, dass die Antenne (10) mit einer zirkularen Polarisation oder einer linearen Polarisation betrieben wird, wobei eine Schaltungsanordnung (24, 28) des Speisenetzwerks, in der Schaltzustände für mindestens drei der vier Polarisationen horizontal-lineare Polarisation, vertikal-lineare Polarisation, rechtsdrehend zirkulare Polarisation und linksdrehend zirkulare Polarisation einstellbar sind, in einen einer gewählten Polarisation entsprechenden Schaltzustand geschaltet wird, so dass die Speisepunkte (P1..P4) mit Phasen und/oder Leistungsanteilen des Eingangssignals (20) für die gewählte Polarisation gespeist werden,
**dadurch gekennzeichnet,**
**dass** das Speisenetzwerk ohne Kreuzungen ausgebildet ist.

## Claims

1. An antenna (10) for an RFID reading device (12), the antenna (10) comprising an antenna element (22) with four feed points (P1..P4) and a feed network configured to connect an input signal (20) selectively to the feed points (P1..P4) in such a way that the antenna (10) is operated with a circular polarization or a linear polarization, the feed network comprising a circuit arrangement (24, 28) in which various switching states can be set, the feed network connecting the feed points (P1..P4) in a respective switching state with different phases and/or power components of the input signal (20), and switching states for at least three of the four polarizations horizontal-linear polarization, vertical-linear polarization, clockwise circular polarization and counterclockwise circular polarization being adjustable in the circuit arrangement (24, 28),
**characterized in that** the feed network is configured without crossings.

2. The antenna (10) according to claim 1,
wherein the feed points (P1..P4) are arranged symmetrically, in particular in a square.

3. The antenna (10) according to claim 1 or 2,
wherein the circuit arrangement (24, 28) comprises a first switching element (24) and a second switching element (28) with a plurality of connecting lines therebetween, in particular four connecting lines.

4. The antenna (10) according to claim 3,
wherein a 90° hybrid coupler (30) is provided in the connecting lines between the first switching element (24) and the second switching element (28), in particular in two of the connecting lines.

5. The antenna (10) according to claim 3 or 4,
wherein the first switching element (24) comprises at least one connection for the input signal (20) on an input side and four connections on an output side towards the antenna element (22), wherein in particular the first switching element (24) comprises a further connection on the input side that is connected to an antenna termination (26).

6. The antenna (10) according to claim 5,
wherein the first switching element (24) is configured as a four-way switch, in particular DP4T, or as a combination of changeover switches (24a-b), in particular a DPDT with two SPDTs connected downstream.

7. The antenna (10) according to claim 3 or 4,
wherein the first switching element (24), in particular formed as SP3T, comprises one connection for the input signal on an input side and three connections on an output side towards the antenna element (22), and wherein the 90° hybrid coupler (30) is fixedly connected to an antenna termination (48).

8. The antenna (10) according to any of claims 3 to 7,
wherein the first switching element (24) comprises additional connections (44) on the output side for a further antenna element.

9. The antenna (10) according to any of claims 3 to 8,
wherein the second switching element (28) comprises two changeover switches, with which in particular one of two connecting lines to the antenna element (22) can be selectively switched through in each case.

10. The antenna (10) according to any of claims 2 to 9,
wherein the feed network comprises two 180° power dividers (32), of which one 180° power divider is connected to two feed points (P1, P3) and the other 180° power divider is connected to the remaining two feed points (P2, P4) in order to feed the respective two connected feed points (P1, P3; P2, P4) with partial signals of the input signal (20) which are phase-shifted by 180°, in particular one respective 180° power divider (32) being connected to a changeover switch of the second switching element (28).

11. The antenna (10) according to claim 10,
wherein the 180° power dividers (32) are configured as hybrid ring couplers (Ratrace Hybrid)
or wherein the 180° power dividers (32) are configured as Wilkinson dividers or T-power dividers, each with a delay line (46) in the connection between Wilkinson divider or T-power divider and feed point (P1..P4), which generates a 180° phase offset.

12. The antenna (10) according to any of the preceding claims,
which comprises a printed circuit board (38), on one surface of which the antenna element (22) is arranged and on the other surface of which the feed network is arranged, in particular the antenna element (22) being configured as an antenna patch.

13. An RFID reading device (12) with an antenna (10) according to any of the preceding claims, comprising a transceiver (14) connected to the antenna (10) and an RFID control and evaluation unit (16) connected to the transceiver (14).

14. A method for switching the polarization of an antenna (10) for an RFID reading device (12), the antenna (10) comprising an antenna element (22) with four feed points (P1... P4), an input signal (20) being selectively connected to the feed points (P1... P4) in different ways with the aid of a feed network of the antenna (10) in such a way that the antenna (10) is operated with a circular polarization or a linear polarization, wherein a circuit arrangement (24, 28) of the feed network, in which switching states for at least three of the four polarizations horizontal-linear polarization, vertical-linear polarization, clockwise circular polarization and counterclockwise circular polarization can be set, is switched to a switching state corresponding to a selected polarization, so that the feed points (P1..P4) are fed with phases and/or power components of the input signal (20) for the selected polarization,
**characterized in that** the feed network is configured without crossings.

## Revendications

1. Antenne (10) pour un dispositif de lecture RFID (12), l'antenne (10) présentant un élément d'antenne (22) avec quatre points d'alimentation (P1..P4) ainsi qu'un réseau d'alimentation qui est conçu pour relier au choix un signal d'entrée (20) aux points d'alimentation (P1..P4) de telle sorte que l'antenne (10) fonctionne avec une polarisation circulaire ou une polarisation linéaire,
dans laquelle
le réseau d'alimentation présente un agencement de circuit (24, 28) permettant de régler des états de commutation différents, et dans un état de commutation respectif, le réseau d'alimentation alimente les points d'alimentation (P1..P4) en différentes phases et/ou composantes de puissance du signal d'entrée (20), et
l'agencement de circuit (24, 28) permet de régler des états de commutation pour au moins trois des quatre polarisations que sont une polarisation linéaire horizontale, une polarisation linéaire verticale, une polarisation circulaire dans le sens dextrogyre et une polarisation circulaire dans le sens lévogyre,
**caractérisée en ce que** le réseau d'alimentation est dépourvu de croisements.

2. Antenne (10) selon la revendication 1,
dans laquelle les points d'alimentation (P1..P4) sont disposés de manière symétrique, en particulier dans un carré.

3. Antenne (10) selon la revendication 1 ou 2,
dans laquelle l'agencement de circuit (24, 28) comprend un premier élément de commutation (24) et un deuxième élément de commutation (28) avec une pluralité de lignes de connexion entre eux, en particulier quatre lignes de connexion.

4. Antenne (10) selon la revendication 3,
dans laquelle un coupleur hybride à 90° (30) est prévu dans les lignes de connexion entre le premier élément de commutation (24) et le deuxième élément de commutation (28), en particulier dans deux des lignes de connexion.

5. Antenne (10) selon la revendication 3 ou 4,
dans laquelle le premier élément de commutation (24) présente au moins une borne pour le signal d'entrée (20) sur un côté d'entrée, et quatre bornes sur un côté de sortie vers l'élément d'antenne (22),
en particulier, sur le côté d'entrée, le premier élément de commutation (24) présente une autre borne qui est reliée à un terminal d'antenne (26).

6. Antenne (10) selon la revendication 5,
dans laquelle le premier élément de commutation (24) est conçu comme un commutateur à quatre voies, en particulier un DP4T, ou comme une combinaison de commutateurs alternatifs (24a-b), en particulier un DPDT avec deux SPDT montés en aval.

7. Antenne (10) selon la revendication 3 ou 4,
dans laquelle le premier élément de commutation (24), conçu en particulier comme un SP3T, présente une borne pour le signal d'entrée sur un côté d'entrée et trois bornes sur un côté de sortie vers l'élément d'antenne (22), et le coupleur hybride à 90° (30) est solidaire d'un terminal d'antenne (48).

8. Antenne (10) selon l'une des revendications 3 à 7,
dans laquelle, sur le côté de sortie, le premier élément de commutation (24) présente des bornes supplémentaires (44) pour un autre élément d'antenne.

9. Antenne (10) selon l'une des revendications 3 à 8,
dans laquelle le deuxième élément de commutation (28) comporte deux commutateurs alternatifs permettant en particulier de connecter respectivement au choix l'une des deux lignes de connexion à l'élément d'antenne (22).

10. Antenne (10) selon l'une des revendications 2 à 9,
dans laquelle le réseau d'alimentation comporte deux diviseurs de puissance à 180° (32), dont un diviseur de puissance à 180° est relié à deux points d'alimentation (P1, P3) et l'autre diviseur de puissance à 180° est relié aux deux points d'alimentation restants (P2, P4), pour alimenter les deux points d'alimentation respectifs reliés (P1, P3 ; P2, P4) en signaux partiels déphasés de 180° du signal d'entrée (20),
en particulier, un diviseur de puissance à 180° (32) respectif est relié à un commutateur alternatif du deuxième élément de commutation (28).

11. Antenne (10) selon la revendication 10,
dans laquelle les diviseurs de puissance à 180° (32) sont conçus comme des coupleurs annulaires hybrides (Ratrace Hybrid),
ou les diviseurs de puissance à 180° (32) sont conçus comme des diviseurs Wilkinson ou comme des diviseurs de puissance T, présentant une ligne à retard (46) respectivement dans la connexion entre le diviseur Wilkinson ou le diviseur de puissance T et le point d'alimentation (P1..P4), qui produit un déphasage de 180°.

12. Antenne (10) selon l'une des revendications précédentes,
comportant une carte de circuit imprimé (38) sur une face de laquelle est disposé l'élément d'antenne (22) et sur l'autre face de laquelle est disposé le réseau d'alimentation,
en particulier, l'élément d'antenne (22) étant conçu comme un patch d'antenne.

13. Dispositif de lecture RFID (12) comprenant une antenne (10) selon l'une des revendications précédentes, qui présente un émetteur-récepteur (14) relié à l'antenne (10) ainsi qu'une unité de commande et d'évaluation RFID (16) reliée à l'émetteur-récepteur (14).

14. Procédé de commutation de la polarisation d'une antenne (10) pour un dispositif de lecture RFID (12), l'antenne (10) présentant un élément d'antenne (22) avec quatre points d'alimentation (P1...P4),
dans lequel
un signal d'entrée (20) est relié au choix de différentes manières aux points d'alimentation (P1...P4) à l'aide d'un réseau d'alimentation de l'antenne (10) de telle sorte que l'antenne (10) fonctionne avec une polarisation circulaire ou une polarisation linéaire,
un agencement de circuit (24, 28) du réseau d'alimentation, permettant de régler des états de commutation pour au moins trois des quatre polarisations que sont une polarisation linéaire horizontale, une polarisation linéaire verticale, une polarisation circulaire dans le sens dextrogyre et une polarisation circulaire dans le sens lévogyre, est commuté dans un état de commutation correspondant à une polarisation sélectionnée, de sorte que les points d'alimentation (P1..P4) sont alimentés en phases et/ou en composantes de puissance du signal d'entrée (20) pour la polarisation sélectionnée,
**caractérisé en ce que** le réseau d'alimentation est dépourvu de croisements.
